Europäisches Patentamt

European Patent Office

Office européen des brevets

(11) Veröffentlichungsnummer: **0 522 379 A2**

## (12) EUROPÄISCHE PATENTANMELDUNG

(21) Anmeldenummer: **92110884.1**

(22) Anmeldetag: **26.06.92**

(51) Int. Cl.⁵: **H04J 14/02**

(30) Priorität: **06.07.91 DE 4122439**

(43) Veröffentlichungstag der Anmeldung:
**13.01.93 Patentblatt 93/02**

(84) Benannte Vertragsstaaten:
**AT BE CH DE DK ES FR GB IT LI NL SE**

(71) Anmelder: **Alcatel SEL Aktiengesellschaft**
**Lorenzstrasse 10**
**W-7000 Stuttgart 40(DE)**

(72) Erfinder: **Mozer, Albrecht, Dr.**
**Marktler Strasse 68**
**W-8263 Burghausen(DE)**

(74) Vertreter: **Pohl, Herbert, Dipl.-Ing et al**
**Alcatel SEL AG Patent- und Lizenzwesen**
**Postfach 30 09 29**
**W-7000 Stuttgart 30(DE)**

(54) **Optisches Zeitmultiplexen.**

(57) Ein optischer Zeitmultiplexer (MUX) besteht aus Multiplexelementen (ME), bei denen Signaleingänge (SE1, SE2) mit einem Signalausgang (SA) über optische Wellenleiter (LWL) miteinander verbunden sind, wobei an den Signaleingängen (SE1, SE2) anliegenden Signalströme (S1, S2) Träger mit unterschiedlicher Wellenlänge (Lambda 1, Lambda 2) anliegen.

Die Multiplexelemente (ME) sind mit einem schaltbaren Filter (F) versehen, das vor dem Signalausgang (SA) angeordnet ist und wechselweise jeweils einen der beiden Signalströme (S1, S2) während der Dauer der Bittaktperiode (T) absorbiert. Das erzeugte Multiplexsignal (S1,2) weist die doppelte Bitfolgefrequenz auf. Durch die Verwendung von Schaltelementen in Form von durchschaltbaren Filtern reduziert sich die Anzahl der Schaltelemente.

Als schaltbare Filter (F) eignen sich insbesondere Multiple-Quantum-Well-Schichtenfolgen, deren Absorptionsbereich schmalbandig ist. Dies hat den Vorteil, daß die unterschiedlichen Wellenlängen dicht beieinander liegen können.

Der optische Multiplexer ist in der Lage, digitale Signale derart zu multiplexen, daß sich die Pulsdauer beim Multiplexen verkürzt.

FIG.1

EP 0 522 379 A2

Die Erfindung betrifft ein Verfahren zum optischen Zeitmultiplexen gemäß dem Oberbegriff des Anspruchs 1 und einen optischen Zeitmultiplexer mit wenigstens einem Multiplexelement, bei dem wenigstens zwei optische Signaleingänge über eine Verknüpfungsstelle mit einem optischen Signalausgang verbunden sind und einem optischen Sender gemäß dem Oberbegriff des Anspruchs 9.

In optischen digitalen Übertragungssystemen steigt die Bitfolgefrequenz kontinuierlich. Zukünftige Zielwerte liegen im Bereich von 30 bis 50 GBit pro Sekunde. Da es mit bekannten direkt modulierten Halbleiterlasern nur sehr schwer möglich sein wird, solche Zielwerte zu erreichen, werden von einzelnen Halbleiterlasern erzeugte Signalströme in einem optischen Zeitmultiplexer zu einem Signalstrom mit höherer Bitfolgefrequenz zusammengefaßt.

Ein solches System ist aus ELECTRONICS LETTERS, vom 8. Oktober 1987, Band 23, Nr. 24, Seiten 1270 und 1271 bekannt. Als Zeitmultiplexer wird im bekannten System ein aktiver 3 dB Ti:LiNbO$_3$ Schalter verwendet.

Beim bekannten System werden die Signalströme von sogenannten phasenverkoppelten Haltleiterlasern erzeugt, die zueinander in einer vorgegebenen Phasenbeziehung stehen. Solche phasenverkoppelte Halbleiterlaser haben die Eigenschaft, daß sie zwar sehr kurze Pulse liefern, zwei aufeinanderfolgende Pulse aber einen zeitlichen Abstand haben, der etwa das Zehnfache der Pulsdauer beträgt. Die erzeugten Pulse haben dabei eine Pulsdauer von 15 ps und werden in Zeitintervallen der Länge von 62,5 ps durchgeschaltet. Dabei stehen die einzelnen Pulse stehen in einer derartigen Phasenbeziehung, daß sie gleichmäßig verteilt sind. Es muß daher lediglich jeweils dasjenige Zeitintervall durchgeschaltet werden, in dem der Puls liegt. Dieses System stößt dann an seine Grenzen, wenn zwei nachfolgende Pulse eines Signalstromes direkt ohne großen zeitlichen Zwischenraum aufeinander folgen.

Der Erfindung liegt nun die Aufgabe zugrunde, ein Verfahren anzugeben, bei dem die Bitfolgefrequenz weiter erhöht werden kann und einen optischen Multiplexer und ein zugehöriges System zu schaffen, mit denen das Verfahren durchgeführt werden kann.

Die Aufgabe wird durch die Merkmale der Ansprüche 1, 4 und 12 gelöst. Vorteilhafte Ausgestaltungen der Erfindung sind den übrigen Ansprüchen zu entnehmen.

Ausführungsbeispiele werden im folgenden anhand der Figuren 1 bis 6 dargestellt. Es zeigen:

Fig. 1 ein erfindungsgemäßes Multiplexelement in der Draufsicht,

Fig. 2 das erfindungsgemäße Multiplexelement aus Fig. 1 im Schnitt AB,

Fig. 3A - 3B mögliche Bandübergänge eines Filters mit einer Multiple-Quantum-Well-Schichtenfolge,

Fig. 4A - 4D das Zusammenfassen der eingehenden Signalströme durch ein angelegtes, sinusförmiges elektrisches Feld in einen ausgehenden Signalstrom,

Fig. 5 ein Ausführungsbeispiel eines Zeitmultiplexers und

Fig. 6 eine Sendeeinheit mit einem erfindungsgemäßen Zeitmultiplexer.

Das erfindungsgemäße Verfahren wird beispielhaft in Verbindung mit dem nachfolgend dargestellten optischen, für sich betrachtet ebenfalls erfindungsgemäßen Multiplexer MUX, der für die Durchführung des Verfahrens besonders geeignet ist, dessen Verwendung sich aber nicht auf die Durchführung des Verfahrens beschränkt, beschrieben. Das erfindungsgemäße Verfahren ist grundsätzlich auch mit anderen optischen Multiplexern durchführbar, sofern diese über eine für kurze Pulse ausreichend schnelle Schaltzeit verfügen.

In der Beschreibung des Multiplexers MUX wird davon ausgegangen, daß die Dauer einer Bittaktperiode der Pulsdauer eines zu multiplexenden Signalstroms entspricht. Für das erfindungsgemäße Verfahren kann die Pulsdauer durchaus auch kleiner als die Dauer einer Bittaktperiode sein. Maßgebend ist, daß die Pulsdauer beim Multiplexen verkürzt wird und sich somit die Bitfolgefrequenz eines Übertragungssystems, in dem das Verfahren benutzt wird, erhöhen läßt.

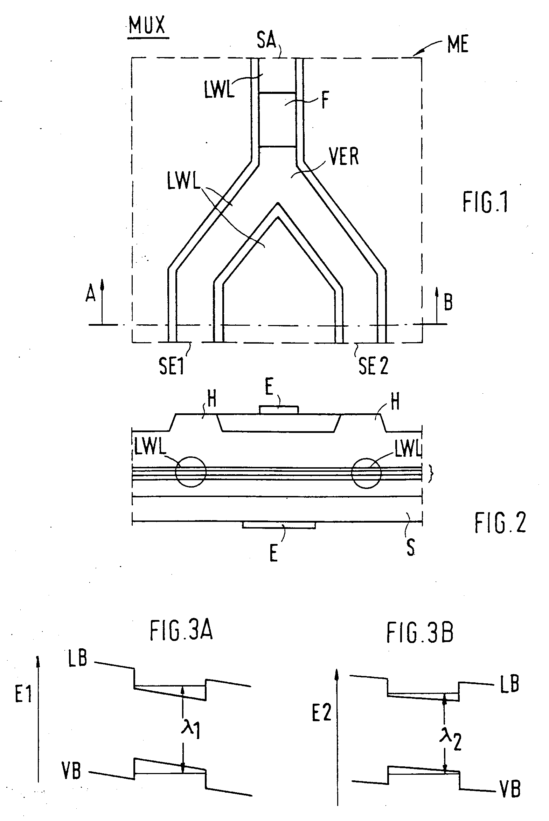

In Fig. 1 ist ein erfindungsgemäßes Multiplexelement ME eines optischen Zeitmultiplexers MUX in der Draufsicht abgebildet. Das Multiplexelement ME weist zwei Signaleingänge SE1, SE2 und einen Signalausgang SA auf. Die Signaleingänge SE1 und SE2 sind durch Lichtwellenleiter LWL über eine Verknüpfungsstelle VER mit dem Signalausgang SA verbunden. Zwischen der Verknüpfungsstelle VER und dem Signalausgang SA ist ein schaltbares Filter F angeordnet. An den Signaleingängen SE1 und SE2 liegen Signale S1 und S2 mit Trägern unterschiedlicher Wellenlänge Lambda 1, Lambda 2 an. Durch Schalten des Filters F kann das eine oder das andere Signal durchgelassen werden.

In Fig. 2 ist der Schichtaufbau eines erfindungsgemäßen Multiplexelements ME im Schnitt AB der Fig. 1 abgebildet. Die Lichtwellenleiter LWL sind als planare integrierte Lichtwellenleiter in bekannter Weise auf einem Substrat S in einer Schichtenfolge integriert aufgebracht. Die Lichtwellenleiter LWL sind, wie später gezeigt, vorteilhafterweise als Multiple-Quantum-Well-Schichtenfolge aufgebaut. Die Strahlführung wird dabei, ebenfalls in bekannter Weise, durch den übrigen Schichtaufbau bestimmt. Beim Ausführugnsbeispiel erhält das Licht seine Vorzugsausbreitungsrichtung durch eine Erhöhung H der Schichtenfolge über dem Bereich der für die Lichtwellenleiter LWL vorgesehen ist. Die Lichtwellenleiter LWL können auch auf andere Art und Weise, wie z.B. aus der EP 01 37 851 B1 bekannt, aus sogenannten PLZT-Schichten, die aus einer Zusammensetzung der Elemente (Pb, La) (Zr, Ti) $O_3$ bestehen, auf der Basis von $LiNbO_3$-Schichten oder optischen Polymeren als optische Wellenleiter aufgebaut sein.

Die Verwendung einer Multiple-Quantum-Well-Schichtenfolge als schaltbares Filter F hat den Vorteil, daß das Licht, je nach Art und Struktur der Multiple-Quantum-Well-Schichtenfolge schmalbandig absorbiert wird und der Absorptionsbereich, der zusammen mit dem Durchlaßbereich das Wellenlängenspektrum abdeckt, durch Anlegen eines elektrischen Feldes verschiebbar ist. Dieser Vorteil wird beim erfindungsgemäßen Zeitmultiplexer ausgenutzt und die Schichtenfolge jedes Multiplexelements ME im Bereich zwischen der Verknüpfungsstelle VER und dem Signalausgang SA von zwei die Schichtenfolge umschließenden Elektroden E umgeben. Durch Anlegen einer elektrischen Spannung kann der Absorptionsbereich der zwischen den Elektroden liegenden Multiple-Quantum-Well-Schichtstruktur von Absorbtion auf Transmission für eine Wellenlänge durchgeschaltet werden.

Für den Fall, daß bei einer bestimmten Ausführung der Erfindung der erforderliche Grad an Absorption nicht erreicht wird, kann die Fläche der Elektrode vom Signalausgang SA ausgehend über die Verknüpfungsstelle VER bis hin zu den Signaleingängen SE1 und SE2 erweitert werden. Die Erweiterung der Elektrodenfläche hat aber eine große elektrische Kapazität des Filters F zur Folge, was mit den bekannten Nachteilen, wie z.B. höheren Schaltzeiten, verbunden ist.

Die Funktionsweise des Filters F in Form einer Multiple-Quantum-Well-Schichtenfolge ist in der Fig. 3A und Fig. 3B abgebildet. Die Figuren zeigen die obere Kante des Valenzbandes VB und die untere Kante des Leitungsbandes LB. Fig. 3A zeigt den Zustand mit einem vorgegebenen anliegenden elektrischen Feld E1 - im folgenden Schaltzustand 1 genannt -, Fig. 3B den Zustand mit einem anderen ebenfalls vorgegebenen Feld E2 - im folgenden Schaltzustand 2 genannt -. Die Felder werden durch Anlegen einer elektrischen Spannung an die Elektroden erzeugt. Durch Verändern des elektrischen Feldes verändern sich die Energieniveaus der Multiple-Quantum-Well-Schichtenfolge. Dies bedeutet, daß die Multiple-Quantum-Well-Schichtenfolge im Schaltzustand 1 Licht mit einer Wellenlänge Lambda 1 absorbiert und im Schaltzustand 2 Licht mit der Wellenlänge Lambda 2 absorbiert , wobei die Wellenlängen beispielsweise Lambda 1 = 1500 nm, Lambda 2 = 1510 nm sind. Der Absorptionsbereich hat, abhängig von der Art der gewählten Multiple-Quantum-Well-Schichtenfolge, z.B. eine Breite von 3 nm.

Die Verwendung einer Multiple-Quantum-Well-Schichtenfolge als schaltbares Filter F hat somit den Vorteil, daß Signalströme auch dann zeitmultiplex bar sind, wenn die Trägerwellenlängen dicht nebeneinander liegen.

Die Verwendung des erfindungsgemäßen Multiplexelementes ME erfordert, daß an den Signaleingängen SE1 und SE2 Signalströme S1, S2 mit unterschiedlicher Trägerwellenlänge Lambda 1, Lambda 2 anliegen. Zur Beschreibung der Funktionsweise sei nun angenommen, daß am Signaleingang SE1 ein Signalstrom S1 mit einem optischen Träger der Wellenlänge Lambda 1 = 1500 nm und am Signaleingang SE2 ein Signalstrom mit einem optischen Träger der Wellenlänge Lambda 2 = 1510 nm eingehen. Liegt am schaltbaren Filter F eine erste Spannung $U_{Min}$ an, so befindet sich das Filter F in der Schaltposition 1, d.h., der Signalstrom S1 wird absorbiert und das Filter F ist für den Signalstrom 2 transparent, d.h., der Signalstrom S2 wird durchgeschaltet. Liegt am Filter F eine Spannung $U_{Max}$ an, so befindet sich das Filter F in der Schaltposition 2, d.h., der Signalstrom 1 wird durchgeschaltet und der Signalstrom 2 wird absorbiert.

Die Aufgabe des Multiplexelements ME ist es, die beiden Signalströme S1 und S2 zu multiplexen, d.h. sie unter Erhöhung der Bitfolgefrequenz ineinander zu verschachteln. Hierzu wird die Dauer eines Pulses, die hier der Dauer einer Bittaktperiode T der eingehenden Signalströme S1, S2 entspricht auf die Dauer $\frac{T}{2}$ der Bittaktperiode des ausgehenden Signalstroms S1,2 halbiert, indem an den Elektroden E des Filters F eine sinusförmige Spannung mit einer Frequenz f = 1 : T angelegt wird. Dadurch werden die beiden Signalströme zeitlich ineinandergeschachtelt und erscheinen am Signalausgang vereint als Signal S1,2.

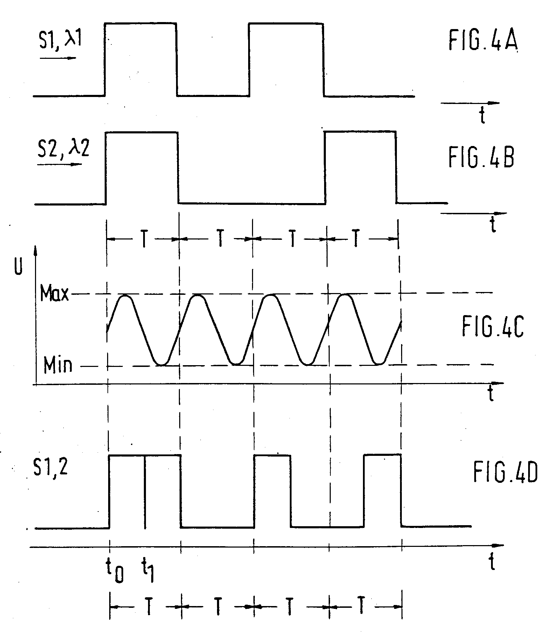

Wenn nun die beiden Signalströme S1 und S2 und die sinusförmige Spannung in Phase sind, erfolgt, wie in den Figuren 4A bis 4P dargestellt, ein einmaliges wechselweises Durchschalten der Signalströme S1 und S2, während der Übertragungsdauer eines Datenbits. In Fig. 4A ist der digitale Signalstrom S1 abgebildet, der, vom Zeitpunkt $t_0$ ausgehend, in der genannten Reihenfolge eine logische 1, 0, 1 und 0 enthält. In Fig. 4B ist der digitale Signalstrom S2 abgebildet, der, vom Zeitpunkt $t_0$ ausgehend, in genannter Reihenfolge eine logische 1, 0, 0 und 1 enthält. In Fig. 4C ist die sinusförmige Spannung abgebildet. Im ersten Zeitintervall $t_0$ bis $t_1$ befindet sich das Filter F in der Schaltposition 2, d.h. die logische 1 des Signalstroms S1 wird in der ersten halben Taktperiode durchgeschaltet, während der zweiten Hälfte befindet sich das Filter F in der Schaltposition 2, d.h., die logische 1 des zweiten Signalstroms S1 wird durchgeschaltet. Das Durchschalten der übrigen Bits der Signalströme erfolgt wie in den Figuren 4A bis 4D abgebildet, dabei wird stets während der ersten Hälfte der Dauer T eine Bittaktperiode stets der Signalstrom S1 und während der zweiten Hälfte der Signalstrom S2 durchgeschaltet und auf diese Weise der ausgehende Signalstrom S1,2 mit einer Dauer der Bittaktperiode $T' = \frac{T}{2}$ erzeugt.

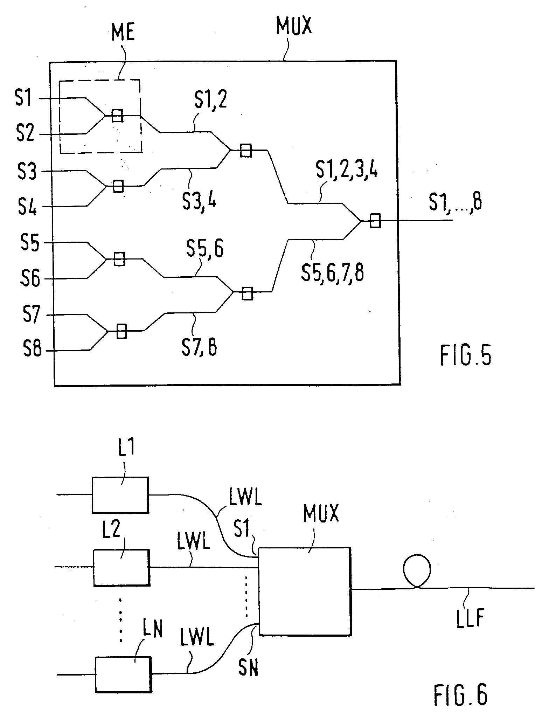

In Fig. 5 ist ein Ausführungsbeispiel eines optischen Zeitmultiplexers MUX mit 8 Signaleingängen, an denen Signale S1 bis S8 anliegen, abgebildet, wobei die Signale S1, S3, S5 und S7 einen Träger mit einer Wellenlänge Lambda 1, die Signale S2, S4, S6 und S8 einen Träger mit einer Wellenlänge Lambda 2 aufweisen. Der gezeigte Zeitmultiplexer MUX besteht aus sieben Multiplexelementen ME, die in drei Stufen kaskadenförmig angeordnet sind. Die Signaleingänge der Multiplexelemente der ersten Stufe stellen die Signaleingänge des Zeitmultiplexers MUX dar. Der Signalausgang des Multiplexelementes ME der letzten, hier der dritten Stufe stellt den Ausgang des Zeitmultiplexers MUX dar. Die Signalausgänge der Multiplexelemente der ersten Stufe sind mit jeweils einem Signaleingang eines Multiplexelementes der zweiten Stufe verbunden. Die Ausgänge der Multiplexelemente der zweiten Stufe sind mit den Eingängen des Multiplexelementes der dritten Stufe verbunden. Die Signale S1 bis S8 weisen eine Dauer der Bittaktperiode T auf. Sie werden in der ersten Stufe zu den Multiplexsignalen S1,2, S3,4, S5,6, und S7,8 mit einer Dauer der Bittaktperiode $\frac{T}{2}$ zusammengefaßt. In der zweiten Stufe werden diese Multiplexsignale in Multiplexsignale S1,2,3,4 und S5,6,7,8 mit einer Dauer der Bittaktperiode $\frac{T}{4}$ zusammengefaßt und diese beiden Multiplexsignale in der dritten Stufe zu einem Multiplexsignal S1-8 mit einer Dauer der Bittaktperiode $\frac{T}{8}$ zusammengefaßt. An den Filtern F der ersten Stufe liegt dabei eine sinusförmige Schwingung mit einer Frequenz $f_1 = \frac{1}{T}$, an der zweiten Stufe eine sinusförmige Schwingung mit einer Frequenz $f_2 = \frac{2}{T}$ und an der dritten Stufe eine sinusförmige Schwingung mit einer Frequenz $f_3 = \frac{4}{T}$ an.

In Fig. 6 ist ein Ausführungsbeispiel eines optischen Senders mit einem optischen Zeitmultiplexer MUX abgebildet, der N Eingänge aufweist, die mit N Lasern als Lichtquellen über integrierte Lichtwellenleiter LWL verbunden sind und einem Signalausgang aufweist, der über eine Lichtleitfaser LLF mit einer zweiten Übertragungseinrichtung (nicht abgebildet) verbunden ist . Das Multiplexelement kann auch drei oder mehr Signaleingänge aufweisen. In diesem Fall werden drei oder mehr Signale in einem Multiplexelement in ein Ausgangssignal verschachtelt. Hierbei ist es erforderlich, daß an jedem Signaleingang Signalströme mit einer entsprechenden Anzahl von Trägern unterschiedlicher Wellenlängen eingehen und das Filter F in der Lage ist, nur einen Signalstrom durchzulassen. Hierzu kann auch eine geeignete Kombination von Filterelementen gewählt werden, die den jeweils gewünschten Durchlaßbereich ermöglichen.

**Patentansprüche**

1. Verfahren zum optischen Zeitmultiplexen von zwei oder mehreren an einem optischen Multiplexelement (ME) anliegenden digitalen optischen Eingangssignalen (S1, S2) in ein optisches Ausgangssignal (S1,2), bei dem im Multiplexelement (ME) die Eingangssignale (S1, S2) abwechselnd optisch durchgeschaltet werden,
   **dadurch gekennzeichnet,**
   daß ein Durchschaltzeitintervall kürzer als die Pulsdauer eines Pulses des Eingangssignales ist.

2. Verfahren nach Anspruch 1, dadurch gekennzeichnet, daß in einem Multiplexelement (ME) zwei Eingangssignale (S1, S2) anliegen, bei denen die Dauer der Bittaktperiode mit der Pulsdauer beim Multiplexen übereinstimmt und die Pulsdauer beim Multiplexen halbiert wird.

3. Verfahren nach Anspruch 1 oder 2, dadurch gekennzeichnet, daß die Pulsdauer der Eingangssignale (S1, S2) kleiner als 50 ps ist.

4. Optischer Zeitmultiplexer (MUX) mit wenigstens einem Multiplexelement (ME), bei dem wenigstens zwei optische Signaleingänge (SE1, SE2), an denen Signale (S1, S2) mit Trägern unterschiedlicher Wellenlänge (Lambda 1, Lambda 2) anliegen, über eine Verknüpfungsstelle (VER) mit einem optischen Signalausgang (SA) verbunden sind, und die an den Signaleingängen (SE1, SE2) anliegenden Signale (S1, S2) durch ein schaltbares Filter (F) wechselweise an den Signalausgang (SA) durchschaltbar sind.

5. Optischer Zeitmultiplexer nach Anspruch 4, dadurch gekennzeichnet, daß das Filter (F) zwischen der Verknüpfungsstelle (VER) und dem Signalausgang (SA) angeordnet ist.

6. Optischer Zeitmultiplexer nach einem der Ansprüche 4 oder 5, dadurch gekennzeichnet, daß die zu multiplexenden Signale (S1, S2) digitale Signale sind und das Filter (F) mit einer periodischen Wechselspannung der Frequenz f = 1 : T, wobei T die Dauer einer Bittaktperiode der zu multiplexenden Signale (S1, S2) darstellt.

7. Optischer Zeitmultiplexer nach einem der Ansprüche 4 bis 6, dadurch gekennzeichnet, daß das Multiplexelement (ME) zwei Signaleingänge (SE1, SE2), an denen jeweils ein Signal (S1, S2) mit jeweils einem Träger einer Wellenlänge (Lambda 1, Lambda 2) anliegt, und einen Signalausgang (SA) aufweist, und das Filter (F) wechselweise die beiden Wellenlängen (Lambda 1, Lambda 2) enthaltende Wellenlängenbereiche sperrt.

8. Optischer Zeitmultiplexer nach einem der Ansprüche 4 bis 7, dadurch gekennzeichnet, daß mehrere Multiplexelemente (ME) kaskadenförmig angeordnet sind, wobei jeweils ein Signalausgang (SA) eines Multiplexelements (ME) mit einem Signaleingang (SE1, SE2) eines nachfolgenden Multiplexelementes (ME) verbunden ist.

9. Optischer Zeitmultiplexer nach einem der Ansprüche 4 bis 8, dadurch gekennzeichnet, daß die im Zeitmultiplexer (MUX) angeordneten Lichtwellenleiter (LWL) planare Lichtwellenleiter sind.

10. Optischer Zeitmultiplexer nach einem der Ansprüche 4 bis 9, dadurch gekennzeichnet, daß das Filter (F) eine Multiple-Quantum-Well-Struktur aufweist, und der Durchlaßbereich des Filters (F) durch Anlegen eines elektrischen Feldes schaltbar ist.

11. Optischer Zeitmultiplexer nach einem der Ansprüche 4 bis 10, dadurch gekennzeichnet, daß die Lichtwellenleiter (LWL) im wesentlichen aus Halbleiterschichten bestehen.

12. Optischer Sender mit einem optischen Zeitmultiplexer nach einem der Ansprüche 4 bis 11, dadurch gekennzeichnet, daß einzelne Halbleiterelemente (LWL, F, LN) integriert angeordnet sind.

MUX

FIG.1

FIG.2

FIG.3A

FIG.3B

FIG.4A

FIG.4B

FIG.4C

FIG.4D

FIG.5

FIG.6